# EUROPÄISCHE PATENTSCHRIFT

(11) **EP 2 705 890 B1**
(45) Veröffentlichungstag und Bekanntmachung des Hinweises auf die Patenterteilung: **06.09.2017**
(21) Anmeldenummer: 13003294.9
(22) Anmeldetag: 28.06.2013
(51) Int. Cl.: B01D 46/24, B01D 46/52

(54) **Filterpatrone**
Filter cartridge
Cartouche de filtre

(30) Priorität: 11.09.2012 DE 102012017890
(43) Veröffentlichungstag der Anmeldung: 12.03.2014
(73) Patentinhaber: Carl Freudenberg KG, 69469 Weinheim (DE)
(72) Erfinder: Schulz, Karsten, 74924 Neckarbischofsheim (DE); Sieh, Maik, 69207 Sandhausen (DE); Klaus, Juergen, 69502 Hemsbach (DE); Becker, Juergen, 67378 Zeiskam (DE)
(74) Vertreter: Reiser & Partner Patentanwälte mbB

(56) Entgegenhaltungen:
- GB-A- 2 327 624
- US-A- 2 732 951
- US-A1- 2002 121 474

## Beschreibung

Die Erfindung betrifft eine Filterpatrone gemäß dem Oberbegriff des Patentanspruchs 1.

Eine derartige Filterpatrone ist aus der DE 10 2006 003 949 B4 bekannt. Solche Filterpatronen werden oft in Entstaubungsanlagen und raumlufttechnischen Anlagen verwendet.

Die US 2002/0121 474 A1 und GB 2 327 624 A zeigen eine Filterpatrone mit einem Filtermedium, welches als länglicher Faltenbalg ausgestaltet ist. Die Faltenrücken des Faltenbalgs erstrecken sich parallel zu seiner Längsachse. Bei der US 2,732,951 erstrecken sich die Faltenrücken quer zur Längsachse.

Derzeit wird in Lackieranlagen mit Lacknasspartikeln belastete Luft durch einen Staubraum gesogen, in dem sich ein Bett aus Kalksteinmehl befindet. Das Kalksteinmehl soll die Lacknasspartikel binden. An diesen Staubraum bzw. an dieses Bett schließen sich Filterplatten an. Nach dem Durchtritt durch die Filterplatten soll die Luft möglichst rein sein.

Anstelle von Filterplatten könnten auch Filterpatronen eingesetzt werden, da diese eine höhere Filterfläche zeigen. Allerdings müssten die Filterpatronen günstige Strömungsverhältnisse im Staubraum erzeugen, damit dort möglichst viele Lackpartikel vom Kalksteinmehl gebunden werden.

Der Erfindung liegt daher die Aufgabe zugrunde, eine Filterpatrone anzugeben, welche die Strömungsverhältnisse in einem Staubraum derart beeinflusst, dass möglichst viele Schmutzpartikel gebunden werden.

Die vorliegende Erfindung löst die zuvor genannte Aufgabe durch die Merkmale des Patentanspruchs 1.

In der Fachwelt herrschte bisher die Ansicht, dass eine im Querschnitt rechteckförmige Filterpatrone in Entstaubungsanlagen und für Entstaubungsanwendungen eher nachteilig sei.

Überraschend hat sich aber herausgestellt, dass eine im Wesentlichen prismenförmige Filterpatrone zu einer Druckdifferenzverringerung führt. Weiter bildet sich in einem der Filterpatrone bzw. mehreren Filterpatronen benachbarten Staubraum eine Art Wirbelschicht aus.

Dies führt zu einer erheblichen Verbesserung der Strömungsverhältnisse. Eine Wirbelschicht erhöht die Verweilzeit des Staubes bzw. Kalksteimehls in einem gewissen Bereich, so dass die Kontaktzeit mit zu bindenden Schmutzpartikeln erhöht wird.

Des Weiteren wird die Reinluftqualität erhöht, da im Vergleich zu einer runden Filterpatrone eine höhere Filterfläche und eine geringere Durchströmungsgeschwindigkeit pro Filterflächeneinheit auftreten.

Erfindungsgemäß ist auch erkannt worden, dass bei einer im Wesentlichen prismenförmigen Filterpatrone im Vergleich zu einer runden Filterpatrone am Kopf eine größere Luftaustrittsfläche zur Verfügung steht. Daraus resultiert eine geringere Druckdifferenz bei gleichem Volumenstrom.

Insoweit ist eine Filterpatrone angegeben, welche die Strömungsverhältnisse in einem Staubraum derart beeinflusst, dass möglichst viele Schmutzpartikel gebunden werden.

Im Sinne dieser Schrift ist ein Prisma ein geometrischer Körper, der ein Vieleck als Grundfläche hat und dessen Seitenkanten im Wesentlichen parallel und gleich lang sind.

Die Faltenrücken des Faltenbalgs erstrecken sich parallel zu seiner Längsachse. Hierdurch zeigt die Filterpatrone eine hohe Stabilität gegen ein Stauchen in Längsrichtung.

In Eckbereichen des Faltenbalgs ist erfindungsgemäß ein Band, vorzugsweise aus Vliesstoff, oder eine Blende, vorzugsweise aus Plastik, auf den Faltenbalg aufgebracht. Hierdurch werden in den Eckbereichen je zwei aufgeklappte Faltenwände stabilisiert. Sowohl das Band als auch die Blende können in Polyurethan vergossen sein.

Der Faltenbalg könnte quaderförmig ausgestaltet sein. Bei einem im Wesentlichen quaderförmigen Faltenbalg steht im Vergleich mit einer runden Filterpatrone am Kopf eine um 18 % größere Luftaustrittsfläche zur Verfügung.

Der Deckel und der Boden könnten rechteckförmig oder quadratisch ausgestaltet sein. Hierdurch läßt sich die Filterpatrone problemlos an bestehende Filtergehäuse von Lackiermaschinen anflanschen.

Eine spezielle Ausbildung der Filterpatrone ermöglicht es, eine oder mehrere Filterpatronen einfach und sicher mit Hilfe von Schnellverschlüssen rohgasseitig zu montieren. Eine Befestigung kann über einen Bajonettverschluß oder Klickverschluß erfolgen. Denkbar ist auch eine Mehrfachmontage von bis zu vier Filterpatronen in Reihe mittels eines Montagegestänges.

Das Verhältnis Höhe zu Breite der Filterpatrone oder des Faltenbalgs könnte 1 zu 1 bis 5 zu 1 betragen. Filterpatronen mit diesem Länge-Breite-Verhältnis können vertikal bzw. hängend angeordnet horizontal angeordnete Filterplatten oder Röhren-Elemente vorteilhaft ersetzen.

Die Tiefe der Falten des Faltenbalgs könnte 15 bis 50 mm betragen. Hierdurch ist eine gleichmäßige und homogene Verteilung der Strömungsgeschwindigkeiten realisiert.

Der Faltenbalg könnte endlos umlaufend ausgestaltet sein. So werden Schnittkanten und Klebestellen minimiert.

Dem Faltenbalg könnten vorzugsweise horizontal angeordnete Stützbänder zugeordnet sein. Hierdurch wird der Faltenabstand dauerhaft eingehalten.

Der Faltenbalg könnte am Deckel und/ oder Boden in Polyurethan vergossen sein. Hierdurch werden Leckagen am Boden und/ oder Deckel vermieden.

Der Faltenbalg könnte einen Stützkorb umgeben. Hierdurch wird ein Kollabieren des Faltenbalgs verhindert.

Der Stützkorb könnte am Deckel und/ oder Boden in Polyurethan vergossen sein. So wird der Stützkorb dauerhaft fixiert.

Auf dem Deckel und/ oder auf dem Boden könnte eine vorzugsweise silikonfreie Dichtung aufgebracht sein. So kann eine dichte Anlage des Deckels und/ oder Bodens an einen Flansch sicher gestellt werden.

Das Filtermedium könnte mehrlagig ausgebildet sein, eine Nanofaserschicht aufweisen und antistatisch ausgestaltet sein. Hierdurch können sehr feine Schmutzpartikel gefiltert werden. Durch die elektrisch antistatische Ausrüstung wird ein Anhaften von feinen Schmutzpartikeln verringert.

Eine erfindungsgemäße Anordnung umfasst ein Filtergehäuse mit einem Staubraum und mindestens eine Filterpatrone der hier beschriebenen Art, wobei die Filterpatrone in den Staubraum hineinragt.

Die hier beschriebene Filterpatrone eignet sich zur Verwendung in einem Verfahren, bei dem in Nasslackierprozessen ein übliches Nass-Auswaschungs-System, welches Wasser einsetzt, durch ein trockenes, mit Filterelementen arbeitendes System ersetzt wird.

Um das Verkleben der Filterelemente mit Lack zu verhindern, wird ein inertes Filterhilfsmittel, nämlich Kalksteinmehl, im Überschuss verwendet, welches nasse Lackpartikel aus einem Overspray im Luftstrom oder auf einer Filteroberfläche bindet. In den bekannten Systemen werden Filterplatten und Röhren-Filterelemente verwendet, die horizontal in die Filtergehäuse eingebaut werden.

Durch die hier beschriebene Filterpatronen wird im Staubraum eine bessere Strömungssituation geschaffen. Es erfolgt quasi eine Wirbelschichtbildung. Dies hängt mit der Geometrie der Filterpatrone sowie deren staubluftseitiger Anordnung im Filtergehäuse zusammen. Die Verweiizeit des Kalksteinmehls zur Lackbindung wird erhöht.

Mit der hier beschriebenen Filterpatrone ist eine gleichmäßige und homogene Verteilung der Strömungsgeschwindigkeiten durch Ausbildung von äquidistanten Filterpatronenabständen realisierbar.

Durch geeignete Auslegung der Abstände, lässt sich der Bereich zwischen den Filterpatronen als quasi-stationäre Wirbelschicht betreiben. Gleichzeitig kann in vergleichbarem Bauraum, der durch den Durchmesser einer runden Filterpatrone bestimmt wird, mehr Filtermedium bei gleichem Faltenabstand untergebracht werden.

Darüber hinaus besteht die Möglichkeit, die Ausbildung des Kopfes der Filterpatrone in einer neuartigen Form oder der Art der Befestigung auszuführen.

### Kurzbeschreibung der Zeichnung

In der Zeichnung zeigen
- Fig. 1: eine perspektivische Ansicht einer quaderförmigen Filterpatrone,
- Fig. 2: eine Längsschnittansicht der Filterpatrone gemäß Fig. 1,
- Fig. 3: eine Draufsicht auf den Deckel der Filterpatrone gemäß Fig. 1, und
- Fig. 4: eine Querschnittansicht der Filterpatrone gemäß Fig. 1.

### Ausführung der Erfindung

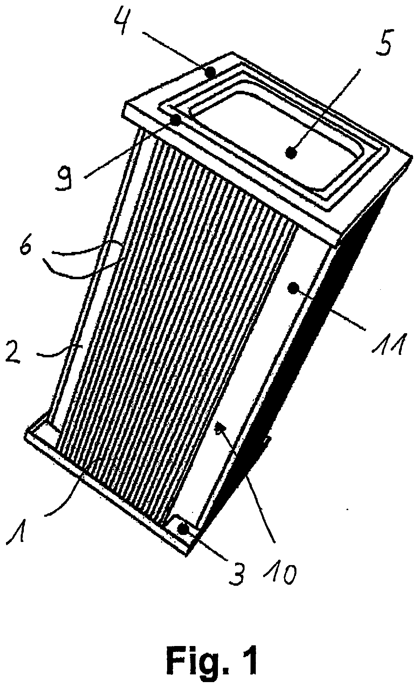

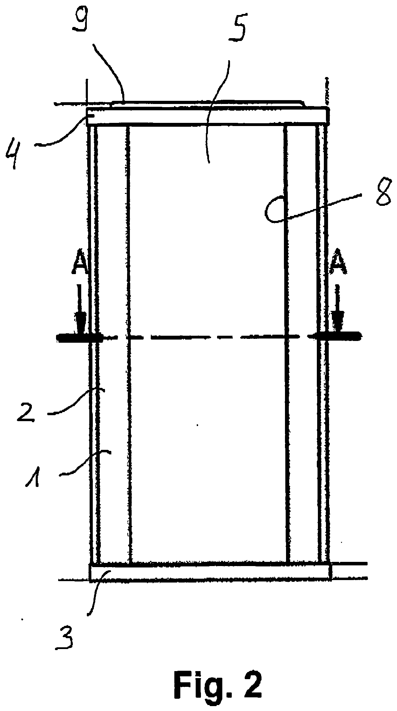

Fig. 1 zeigt perspektivisch und Fig. 2 in einer Längsschnittansicht eine Filterpatronen, umfassend ein Filtermedium 1, welches als länglicher Faltenbalg 2 ausgestaltet ist, wobei der Faltenbalg 2 an seinem ersten Längsende mit einem Boden 3 und an seinem zweiten Längsende mit einem Deckel 4 verbunden ist und wobei der Faltenbalg 2 einen Zentraldurchgang 5 umfängt.

Der Faltenbalg ist prismenförmig ausgestaltet.

Fig. 1 zeigt, dass sich die Faltenrücken 6 des Faltenbalgs 2 parallel zu seiner Längsachse erstrecken. Der Faltenbalg 2 ist quaderförmig ausgestaltet. Die Faltenrücken 6 des Faltenbalgs 2 liegen jeweils in vier Seitenflachen, die den Quader bilden.

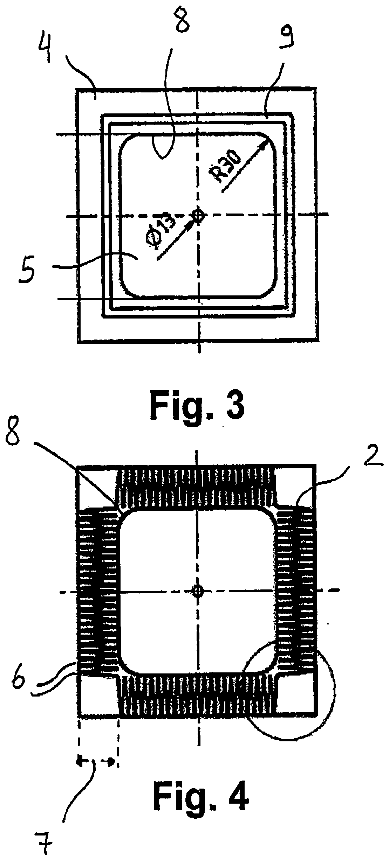

Fig. 3 zeigt, dass der Deckel 4 quadratisch ausgestaltet ist. Fig. 1 zeigt, dass der Deckel 4 und der Boden 3 quadratisch ausgestaltet sind. Das Verhältnis Höhe zu Breite der Filterpatrone oder des Faltenbalgs beträgt 1 zu 1 bis 5 zu 1.

Fig. 4 zeigt, dass die Tiefe 7 der Falten des Faltenbalgs 2 15 bis 50 mm beträgt. Der Faltenbalg 2 ist endlos umlaufend ausgestaltet. Der Faltenbalg 2 ist am Deckel 4 und am Boden 3 in Polyurethan vergossen. Der Faltenbalg 2 umgibt einen Stützkorb 8. Der Stützkorb 8 ist am Deckel 4 und am Boden 3 in Polyurethan vergossen.

Fig. 3 zeigt, dass auf dem Deckel 4 eine Dichtung 9 aufgebracht ist. Die Dichtung 9 ist umlaufend ausgestaltet Die Dichtung 9 ist silikonfrei.

Das Filtermedium 1 ist mehrlagig ausgebildet, weist eine Nanofaserschicht auf und ist antistatisch ausgerüstet. Das Filtermedium 1 ist mit Druckluft abreinigbar.

Fig. 1 zeigt, dass in Eckbereichen 10 des Faltenbalgs 2 ein Band 11 oder eine Blende auf den Faltenbalg 2 aufgebracht ist. Hierdurch wird ein Kantenschutz geschaffen. Die im Eckbereich 10 liegenden, etwa um 90° aufgeklappten Faltenwände werden durch das Band 11 stabilisiert. Das Band 11 ist ebenfalls am Boden 3 und am Deckel 4 in Polyurethan vergossen.

Die Filterpatrone weist eine Länge von 100 bis 500 mm und eine Breite von 100 bis 500 mm auf. Die Höhe der Filterpatrone beträgt maximal 2500 mm.

## Patentansprüche

1. Filterpatrone, umfassend ein Filtermedium (1), welches als länglicher Faltenbalg (2) ausgestaltet ist, wobei der Faltenbalg (2) an seinem ersten Längsende mit einem Boden (3) und an seinem zweiten Längsende mit einem Deckel (4) verbunden ist und wobei der Faltenbalg (2) einen Zentraldurchgang (5) umfängt, wobei der Faltenbalg (2) prismenförmig ausgestaltet ist, wobei sich die Faltenrücken (6) des Faltenbalgs (2) parallel zu seiner Längsachse erstrecken, **dadurch gekennzeichnet, dass** in Eckbereichen (10) des Faltenbalgs (2) ein Band (11) oder eine Blende auf den Faltenbalg (2) aufgebracht ist.

2. Filterpatrone nach Anspruch 1, **dadurch gekennzeichnet, dass** der Faltenbalg (2) quaderförmig ausgestaltet ist.

3. Filterpatrone nach einem der voranstehenden Ansprüche, **dadurch gekennzeichnet, dass** der Deckel (4) und der Boden (3) rechteckförmig oder quadratisch ausgestaltet sind.

4. Filterpatrone nach einem der voranstehenden Ansprüche, **dadurch gekennzeichnet, dass** das Verhältnis Höhe zu Breite der Filterpatrone oder des Faltenbalgs (2) 1 zu 1 bis 5 zu 1 beträgt.

5. Filterpatrone nach einem der voranstehenden Ansprüche, **dadurch gekennzeichnet, dass** die Tiefe (7) der Falten des Faltenbalgs (2) 15 bis 50 mm beträgt.

6. Filterpatrone nach einem der voranstehenden Ansprüche, **dadurch gekennzeichnet, dass** der Faltenbalg (2) endlos umlaufend ausgestaltet ist.

7. Filterpatrone nach einem der voranstehenden Ansprüche, **dadurch gekennzeichnet, dass** dem Faltenbalg (2) Stützbänder zugeordnet sind.

8. Filterpatrone nach einem der voranstehenden Ansprüche, **dadurch gekennzeichnet, dass** der Faltenbalg (2) am Deckel (4) und/ oder Boden (3) in Polyurethan vergossen ist.

9. Filterpatrone nach einem der voranstehenden Ansprüche, **dadurch gekennzeichnet, dass** der Faltenbalg (2) einen Stützkorb (8) umgibt.

10. Filterpatrone nach dem voranstehenden Anspruch, **dadurch gekennzeichnet, dass** der Stützkorb (8) am Deckel (4) und/ oder Boden (3) in Polyurethan vergossen ist.

11. Filterpatrone nach einem der voranstehenden Ansprüche, **dadurch gekennzeichnet, dass** auf dem Deckel (4) und/ oder auf dem Boden (3) eine Dichtung (9) aufgebracht ist.

12. Filterpatrone nach einem der voranstehenden Ansprüche, **dadurch gekennzeichnet, dass** das Filtermedium (1) mehrlagig ausgebildet ist, eine Nanofaserschicht aufweist und antistatisch ausgestaltet ist.

13. Anordnung, umfassend ein Filtergehäuse mit einem Staubraum und mindestens eine Filterpatrone nach einem der voranstehenden Ansprüche, wobei die Filterpatrone in den Staubraum hineinragt.

## Claims

1. Filter cartridge, comprising a filter medium (1) configured as an elongate bellows (2), the bellows (2) being connected at the first longitudinal end thereof to a base (3) and at the second longitudinal end thereof to a cover (4), and the bellows (2) enveloping a central passage (5), the bellows (2) being prism-shaped, the backs (6) of the folds of the bellows (2) extending parallel to the longitudinal axis of said bellows, **characterized in that** in corner regions (10) of the bellows (2) a strip (11) or screen is attached to the bellows (2).

2. Filter cartridge according to claim 1, **characterized in that** the bellows (2) is configured to be cuboidal.

3. Filter cartridge according to any of the preceding claims, **characterized in that** the cover (4) and the base (3) being rectangular-shaped or square-shaped.

4. Filter cartridge according to any of the preceding claims, **characterized in that** the height to width ratio of the filter cartridge or of the bellows (2) is between 1 to 1 and 5 to 1.

5. Filter cartridge according to any of the preceding claims, **characterized in that** the depth (7) of the folds of the bellows (2) is 15 to 50 mm.

6. Filter cartridge according to any of the preceding claims, **characterized in that** the bellows (2) is configured to be endlessly circulating.

7. Filter cartridge according to any of the preceding claims, **characterized in that** braces are assigned to the bellows (2).

8. Filter cartridge according to any of the preceding claims, **characterized in that** the bellows (2) is cast in polyurethane at the cover (4) and/or base (3).

9. Filter cartridge according to any of the preceding claims, **characterized in that** the bellows (2) encloses a supporting cage (8).

10. Filter cartridge according to the preceding claim, **characterized in that** the supporting cage (8) is cast in polyurethane at the cover (4) and/or base (3).

11. Filter cartridge according to any of the preceding claims, **characterized in that** a seal (9) is attached to the cover (4) and/or to the base (3).

12. Filter cartridge according to any of the preceding claims, **characterized in that** the filter medium (1) is formed multi-layered, has a nanofibre layer and is configured to be antistatic.

13. Arrangement, comprising a filter housing having a dust chamber and at least one filter cartridge according to any of the preceding claims, the filter cartridge protruding into the dust space.

## Revendications

1. Cartouche filtrante comprenant un milieu filtrant (1) qui est conçu comme soufflet (2) allongé, dans laquelle le soufflet (2) est relié à un fond (3) sur sa première extrémité longitudinale et à un couvercle (4) sur sa deuxième extrémité longitudinale, et dans laquelle le soufflet (2) entoure un passage central (5), dans laquelle le soufflet (2) est conçu en forme de prisme, dans laquelle les dos des plis (6) du soufflet (2) s'étendent parallèlement à son axe longitudinal, **caractérisée en ce que** dans des zones en coin (10) du soufflet (2), une bande (11) ou un bandeau est appliqué sur le soufflet (2).

2. Cartouche filtrante selon la revendication 1, **caractérisée en ce que** le soufflet (2) est conçu de forme parallélépipédique.

3. Cartouche filtrante selon l'une quelconque des revendications précédentes, **caractérisée en ce que** le couvercle (4) et le fond (3) sont conçus de forme rectangulaire ou carrée.

4. Cartouche filtrante selon l'une quelconque des revendications précédentes, **caractérisée en ce que** le rapport hauteur/largeur de la cartouche filtrante ou du soufflet (2) est de 1 sur 1 à 5 sur 1.

5. Cartouche filtrante selon l'une quelconque des revendications précédentes, **caractérisée en ce que** la profondeur (7) des plis du soufflet (2) est de 15 à 50 mm.

6. Cartouche filtrante selon l'une quelconque des revendications précédentes, **caractérisée en ce que** le soufflet (2) est conçu de manière périphérique continue.

7. Cartouche filtrante selon l'une quelconque des revendications précédentes, **caractérisée en ce que** des bandes de support sont associées au soufflet (2).

8. Cartouche filtrante selon l'une quelconque des revendications précédentes, **caractérisée en ce que** le soufflet (2) est moulé en polyuréthanne sur le couvercle (4) et/ou le fond (3).

9. Cartouche filtrante selon l'une quelconque des revendications précédentes, **caractérisée en ce que** le soufflet (2) entoure un panier de support (8).

10. Cartouche filtrante selon la revendication précédente, **caractérisé en ce que** le panier de support (8) est moulé en polyuréthanne sur le couvercle (4) et/ou le fond (3).

11. Cartouche filtrante selon l'une quelconque des revendications précédentes, **caractérisée en ce qu'**un joint est appliqué sur le couvercle(4) et/ou sur le fond (3).

12. Cartouche filtrante selon l'une quelconque des revendications précédentes, **caractérisée en ce que** le milieu filtrant (1) est réalisé avec plusieurs couches, **en ce qu'**il présente une couche à nanofibre et est conçu de manière antistatique.

13. Agencement comprenant un boîtier de filtre muni d'un espace à poussière et d'au moins une cartouche filtrante selon l'une quelconque des revendications précédentes, la cartouche filtrante dépassant dans l'espace à poussière.
